# FASCICULE DE BREVET EUROPEEN

(11) **EP 1 500 787 B1**
(45) Date de publication et mention de la délivrance du brevet: **12.09.2007**
(21) Numéro de dépôt: 04103337.4
(22) Date de dépôt: 13.07.2004
(51) Int. Cl.: F01D 5/14, F01D 17/16

(54) **Dispositif de dégivrage pour aube de roue directrice d'entrée de turbomachine, aube dotée d'un tel dispositif de dégivrage, et moteur d'aéronef equipé de telles aubes**
Enteisungsvorrichtung einer Einla leitschaufel einer Turbomaschine, damit ausgestattete Schaufel sowie mit einer solchen Schaufel ausgerüsteter Flugzeugmotor
De-icing device for inlet vanes of a turbo engine, the vane using the same de-icing device and the aeronautical engine using such vanes.

(30) Priorité: 17.07.2003 FR 0350345
(43) Date de publication de la demande: 26.01.2005
(73) Titulaire: SNECMA, 75015 Paris (FR)
(72) Inventeur: Courtot, Yannick, Jean, Roger, 91280, Saint Pierre du Perray (FR); Marlin, François, Marie, Paul, 77760, Villiers sous Grez (FR); Danielo, Jean, Armand, François, 94140, Alfortville (FR)
(74) Mandataire: Poulin, Gérard

(56) Documents cités:
- GB-A- 774 501
- US-A- 4 897 020
- US-A- 4 972 671
- US-A- 5 795 128
- US-A1- 2002 071 766

## Description

### DOMAINE TECHNIQUE

La présente invention se rapporte au domaine technique des dispositifs de dégivrage pour roue directrice d'entrée de turbomachine. Elle vise une aube de roue directrice d'entrée dotée d'un tel dispositif de dégivrage. Elle vise encore un moteur d'aéronef équipé de telles aubes.

### ETAT DE LA TECHNIQUE ANTERIEURE

On connaît, par exemple par le document FR 2 607 188, des aubes de roue directrice d'entrée de turbomachine, à calage variable, reliant un carter d'entrée à un moyeu central. Ces aubes comportent chacune une partie fixe et un volet mobile. Les parties fixes sont des pièces structurales disposées radialement par rapport au moyeu central et jouent un rôle de support pour le carter d'entrée. Elles sont encore appelées bras de carter d'entrée. Les volets mobiles sont situés en aval de la partie fixe qui leur est associée, et sont articulés par rapport à celle-ci autour d'une direction sensiblement radiale par rapport au moyeu central, par l'intermédiaire d'un pivot radialement interne et d'un pivot radialement externe. L'orientation des volets mobiles permet de régulariser le flux d'air alimentant les étages des compresseurs situés en aval.

Lorsque la turbomachine fonctionne sous certaines conditions environnementales, par exemple lorsqu'elle est installée sur un aéronef qui vole dans des conditions atmosphériques humides et froides, du givre peut se former sur les aubes d'entrée, et plus particulièrement sur le bord d'attaque de la partie fixe et sur les faces du volet mobile. Si des morceaux de glace formés sur la surface des aubes d'entrée se détachaient de celle-ci, ils seraient susceptibles de pénétrer dans la turbomachine et d'y provoquer des dégâts. Il se produirait également une dégradation des performances de la turbomachine, due à une mauvaise alimentation des roues mobiles aval.

On cherche donc classiquement à éliminer la glace qui se forme sur les aubes d'entrée, et, de préférence, à empêcher la formation de glace sur ces aubes.

Il existe différents dispositifs de dégivrage des aubes de roue d'entrée, qui prélèvent de l'air chaud dans le compresseur haute pression, amènent cet air jusqu'à un collecteur d'air, puis l'utilisent pour réchauffer les aubes de roue d'entrée et maintiennent cette aube à une température suffisamment élevée pour empêcher la formation de glace.

Le document FR 2 631 386 divulgue un mode de dégivrage de la partie fixe, et notamment de son bord d'attaque. La partie fixe est creuse, l'air chaud prélevé dans le compresseur est injecté dans ladite partie fixe et circule à l'intérieur de celle-ci.

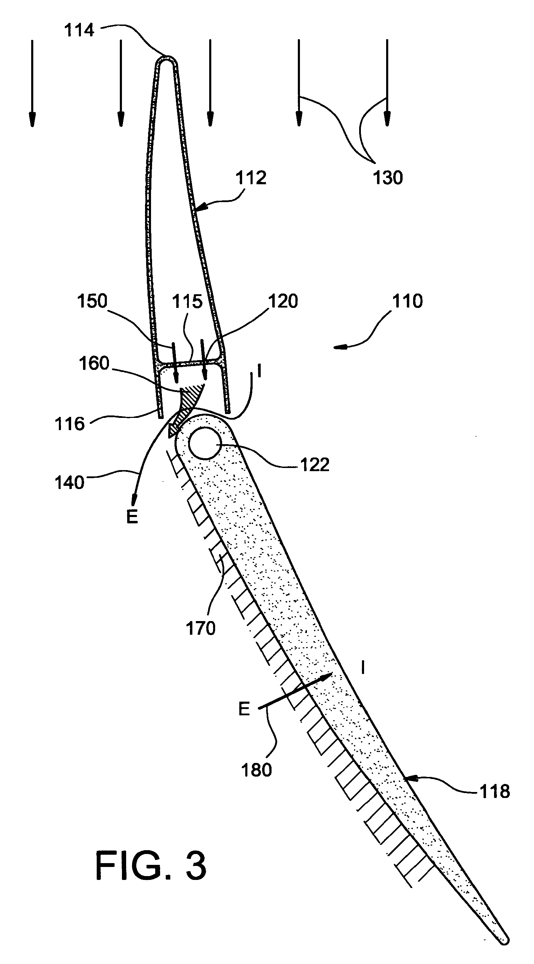

Sur la figure 3 annexée est décrit un dispositif de dégivrage conforme à l'art antérieur. Une aube 110 de roue directrice d'entrée comporte une partie fixe 112 et un volet mobile 118 disposé en aval de la partie fixe 112 et apte à pivoter autour d'une direction sensiblement radiale 122. Le volet mobile 118 est dégivré grâce à l'air chaud provenant de la partie fixe 112 associée. L'air extérieur, formant l'écoulement d'air principal matérialisé par les flèches 130, pénètre dans la turbomachine, de part et d'autre du bord d'attaque 114 de la partie fixe 112. Puis, du fait de la différence de pression existant entre l'intrados I et l'extrados E de l'aube d'entrée 110, l'air extérieur s'écoule de l'intrados I vers l'extrados E, au voisinage de la liaison entre la partie fixe 112 et le volet mobile 118, comme l'indique la flèche 140. D'autre part, la partie fixe 112 est creuse. De l'air chaud provenant du compresseur est injecté dans ladite partie fixe 112 et circule à l'intérieur de celle-ci, de manière à empêcher la formation de glace sur son bord d'attaque 114 et sur sa surface, comme cela a été décrit ci-dessus en référence au document FR 2 631 386. La partie fixe 112 est dotée d'un bord aval 116 ayant, en coupe transversale, une forme de « U », les branches du « U » étant dirigées vers l'aval et vers le volet mobile. Sur le fond 115 du « U » sont ménagés des trous traversants 120 par lesquels l'air chaud qui a été injecté dans la partie fixe 112, formant alors l'écoulement d'air secondaire, peut être ensuite envoyé sur le volet mobile 118, comme le montrent les flèches 150. Cet écoulement d'air secondaire chaud est aspiré par le courant d'air principal froid 140, comme le montre la flèche 160, puis il circule sous forme d'une pellicule 170 le long de l'extrados E du volet mobile 118. Le dégivrage du volet mobile 118 se fait donc de la manière suivante : son extrados E est réchauffé directement par la pellicule 170, par effet de convection de chaleur, tandis que son intrados I est réchauffé indirectement, par effet de conduction de chaleur à travers l'épaisseur dudit volet mobile 118, de l'extrados E vers l'intrados I, comme le montre la flèche 180.

Il est connu que, du fait de l'orientation du volet mobile en cours de fonctionnement, la glace tend à se former préférentiellement du côté de l'intrados. C'est donc le dégivrage du volet mobile du côté de l'intrados que l'on cherche à rendre le plus performant.

Le dispositif de dégivrage qui vient d'être décrit présente cependant un certain nombre d'inconvénients.

Un premier inconvénient réside dans la réalisation des trous traversant le fond de la partie en « U » du bord de fuite de la partie fixe. Ces trous sont réalisés après l'opération de formage en « U » et avant une opération de brasage du bord de fuite. Lorsque les trous sont obtenus par une technique de perçage par électroérosion ou de poinçonnage, ces techniques nécessitent la mise en oeuvre d'un outillage coûteux qu'il est difficile de modifier en cas de changement de définition de pièce. Lorsque les trous sont obtenus par une technique de perçage laser, leur périphérie subit des contraintes thermiques non souhaitées. Lors de l'opération de brasage du bord de fuite, il existe un risque que ces trous soient bouchés.

Un deuxième inconvénient réside dans le fait que la conduction de chaleur est d'autant plus efficace que le volet mobile est mince. En présence d'un volet épais, l'efficacité du dégivrage sur l'intrados du volet mobile est moins bonne, à moins de prélever et d'envoyer davantage d'air chaud sur celui-ci, ce qui n'est généralement pas souhaité.

Un troisième inconvénient apparaît lorsque le volet mobile présente une corde élevée. Dans un tel cas, le dégivrage du volet mobile se fait de façon incomplète, car la pellicule d'air chaud envoyé sur l'extrados du volet mobile n'atteint pas correctement le bord de fuite dudit volet mobile.

Un quatrième inconvénient est lié à la nature du matériau constitutif du volet mobile. En effet, on réalise de plus en plus souvent le volet mobile en matériau composite plutôt qu'en matériau métallique, notamment pour des raisons de réduction de masse. Le matériau composite étant mauvais conducteur de chaleur, un dispositif de dégivrage qui utilise la conduction de chaleur à travers l'épaisseur du volet mobile ne peut être retenu.

Il est donc nécessaire de disposer d'un dispositif de dégivrage qui puisse dégivrer une aube de roue directrice d'entrée de turbomachine, du type ayant une partie fixe qui est aussi un bras support de carter d'entrée et un volet mobile à calage variable, qui puisse être utilisé même lorsque le volet mobile est relativement épais ou présente une corde élevée et/ou lorsqu'il est réalisé en matériau composite, et dont la réalisation soit aisée et peu coûteuse sur une ligne de production.

Le document US 2002/071766-A1 divulgue un volet redresseur de turbomachine réalisé en matériau composite, qui peut être muni de passages internes, et implanté dans un carter d'entrée de turbomachine entouré d'un collecteur de dégivrage. Un bras peut être disposé en amont du volet redresseur, entre la partie de carter extérieur et la partie de carter intérieur, ce bras étant creux et présenant des orifices formés le long de son bord de fuite.

Le document GB 774501-A divulgue une aube de turbomachine comportant une partie avant fixe ainsi qu'une partie arrère mobile qui est montée sur pivots et qui forme une continuité régulière de la partie avant fixe. La partie fixe est creuse. Elle comporte une coque extérieure et une corde intérieure, entre lesquelles circule de l'air de refroidissement qui s'écoule vers l'arrière. Cet air de refroidissement est évacué par des ouvertures situées sur le bord arrière de la partie fixe, de telle manière qu'il s'écoule sur la surface de la partie mobile pivotante. Cette partie fixe a un bord arrière présentant une forme en U et ayant des ouvertures situées entre les branches du U.

### EXPOSÉ DE L'INVENTION

La présente invention propose un dispositif de dégivrage d'une aube de roue directrice d'entrée de turbomachine, qui ne présente pas les inconvénients mentionnés ci-dessus.

Selon un premier aspect, l'invention se rapporte à une aube de roue directrice d'entrée d'une turbomachine, selon la revendication 1.

Selon la caractéristique du premier aspect, ledit dispositif de dégivrage comporte au moins une fenêtre d'émission, orientée sensiblement selon une direction amont-aval, et disposée uniquement le long de la branche du « U » se trouvant du côté intrados du bord de fuite de la partie fixe.

Selon un mode de réalisation du premier aspect, ledit dispositif de dégivrage comporte au moins une fenêtre d'émission, orientée sensiblement selon une direction amont-aval, et disposée le long de la branche du « U » se trouvant du côté intrados du bord de fuite de la partie fixe, et au moins une fenêtre d'émission, orientée sensiblement selon une direction amont-aval, et disposée le long de la branche du « U » se trouvant du côté extrados du bord de fuite de la partie fixe.

De manière optionnelle, le dispositif de dégivrage comporte en outre des perforations traversant, sensiblement selon une direction amont-aval, le fond du « U » formant le bord de fuite de la partie fixe, lesdites perforations étant localisées au moins dans une zone se trouvant, en fonctionnement, en regard de la liaison du volet mobile 18 avec l'un des pivots.

De préférence, le dispositif de dégivrage comporte en outre des moyens d'amenée d'air chaud vers le carter de la roue directrice d'entrée, depuis un étage de compression situé en aval de ladite roue d'entrée.

Selon un autre aspect, l'invention se rapporte à un moteur d'aéronef comportant une roue directrice d'entrée équipée d'aubes selon le premier aspect de l'invention. Ce moteur d'aéronef comporte donc au moins un dispositif de dégivrage tel que défini.

### BRÈVE DESCRIPTION DES DESSINS

L'invention sera mieux comprise à la lecture de la description détaillée qui va suivre de modes de réalisation particuliers de l'invention, fournis à titre illustratif et nullement limitatif, en référence aux dessins annexés, dans lesquels :
- la figure 1 représente, en coupe longitudinale, un moteur d'aéronef montrant la situation et l'environnement d'un dispositif de dégivrage selon l'invention ;
- la figure 2 représente, en vue latérale, une aube de roue directrice d'entrée, montrant la partie fixe, le volet mobile, et le collecteur, une partie du bord de fuite de la partie fixe étant retirée ;
- la figure 3, déjà décrite, représente, en coupe transversale, une aube de roue directrice d'entrée et son dispositif de dégivrage selon l'art antérieur ;
- la figure 4 représente, en coupe transversale, une aube de roue directrice d'entrée et son dispositif de dégivrage selon le premier mode de réalisation ;
- la figure 5 est analogue à la figure 4 pour une première variante du second mode de réalisation du dispositif de dégivrage ;
- la figure 6 est une vue en perspective illustrant une seconde variante du second mode de réalisation du dispositif de dégivrage ; et
- les figures 7a, 7b, 7c, 7d montrent, de manière schématique et en coupe selon un plan longitudinal, diverses formes de réalisation des fenêtres d'émission.

### EXPOSÉ DÉTAILLÉ DE MODES DE RÉALISATION PARTICULIERS

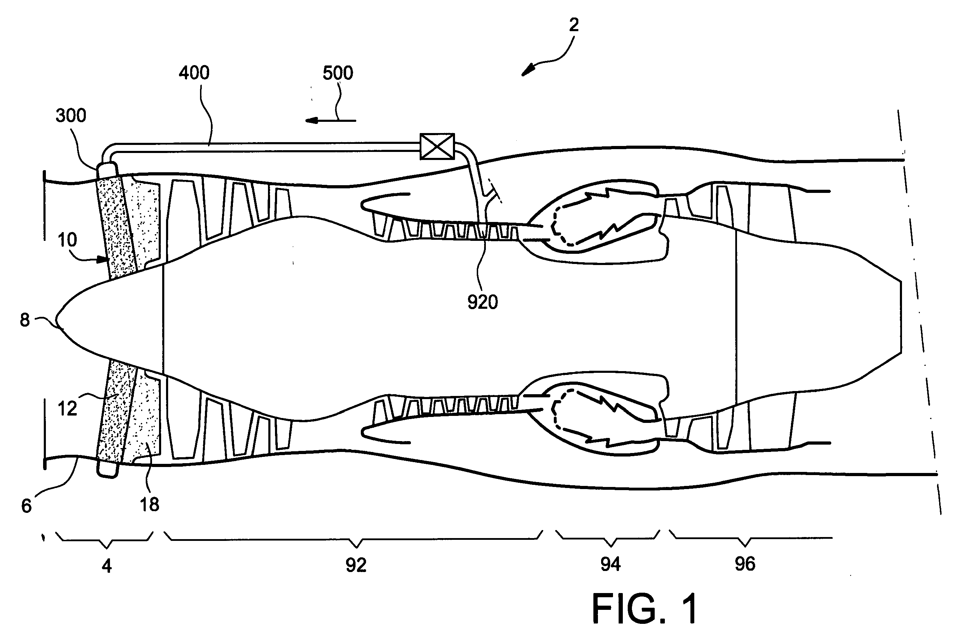

En se référant tout d'abord à la figure 1, on a représenté de façon simplifiée un moteur d'aéronef 2 comportant à l'avant une roue directrice d'entrée 4 formée par un carter d'entrée 6 sensiblement concentrique autour d'un moyeu central 8 et par des aubes 10. Les aubes 10 sont elles même formées d'une partie fixe 12, et d'un volet mobile 18. En aval de la roue directrice d'entrée 4 se trouve(nt) classiquement un ou plusieurs étage(s) de compression 92, une chambre de combustion 94, et une turbine 96.

Le dispositif de dégivrage selon l'invention comporte des moyens d'amenée d'air chaud 300, 400, représentés sur la figure 1. Ils comportent un collecteur 300, disposé de manière circonférentielle autour du carter 6 de la roue directrice d'entrée 4. Ils comportent également au moins un conduit d'amenée 400 qui relie ledit collecteur 300 à un étage de compression 920 dans lequel ledit air chaud est prélevé. Lorsque plusieurs conduits d'amenée 400 sont présents, ils sont de préférence répartis de manière régulière sur la périphérie du moteur d'aéronef 2. L'air chaud, prélevé dans ledit étage de compression 920, circule dans le conduit d'amenée 400 (flèche 500), puis arrive dans le collecteur 300, d'où il s'écoule ensuite vers les parties fixes des aubes 10.

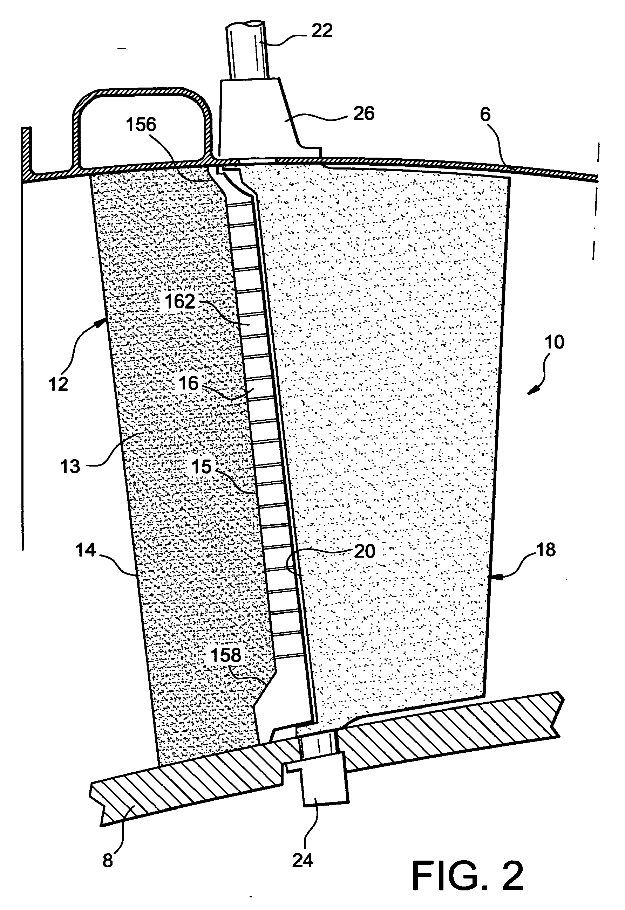

La figure 2 illustre plus précisément une aube 10 de roue directrice d'entrée ayant en amont une partie fixe 12 et en aval un volet mobile 18. La partie fixe 12 est une pièce structurale qui est rigidement liée, d'une part à un moyeu central 8, et d'autre part à un carter 6 qu'elle contribue à supporter. Elle comporte un corps 13, creux, un bord d'attaque 14, et un bord de fuite 16, qui se présente sous la forme d'un « U » ayant un fond 15 et des branches 162, 164 qui s'étendent vers l'aval. Pour des besoins de compréhension, la branche du « U » côté extrados 164 du bord de fuite 16 a été retirée, et seule est visible à la figure 2 la branche du « U » côté intrados 164. Le volet mobile 18 est apte à pivoter autour d'une direction 22 sensiblement radiale à partir du moyeu central 8, par l'intermédiaire d'un pivot central 24 fixé audit moyeu central 8 et d'un pivot périphérique 26 fixé au carter d'entrée 6, lesdits pivots 24, 26 étant disposés à proximité du bord d'attaque 20 du volet mobile 18.

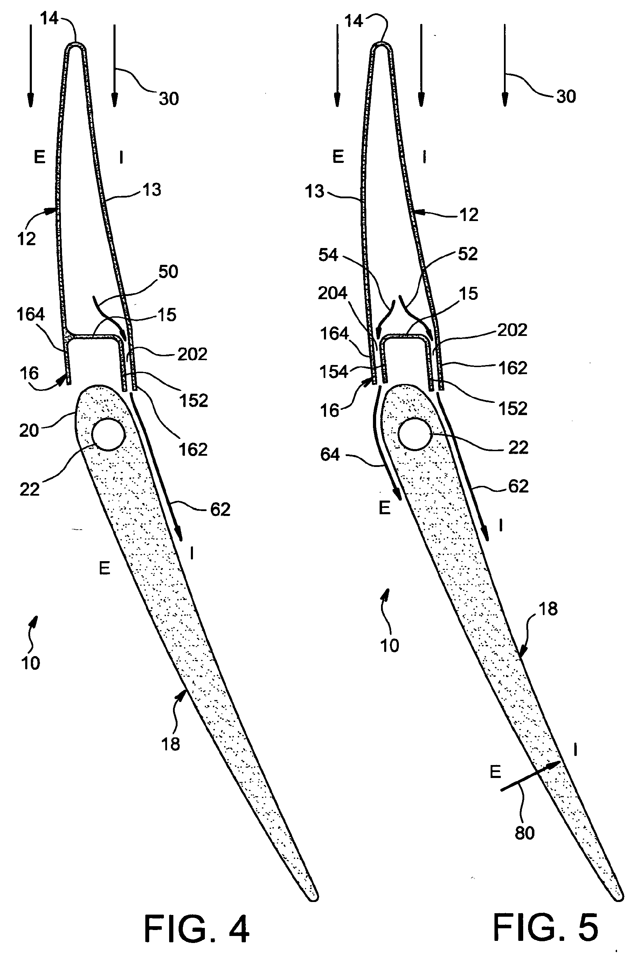

Un premier et un second modes de réalisation du dispositif de dégivrage sont illustrés respectivement à la figure 4 et à la figure 5. Sur les figures, la partie fixe 12 et le volet mobile 18 de l'aube 10 de roue directrice d'entrée sont vus en coupe transversale.

Un écoulement d'air principal, provenant de l'extérieur du moteur d'aéronef et repéré aux figures par les flèches 30, arrive sur le bord d'attaque 14 de la partie fixe 12.

Un écoulement d'air secondaire, chaud, provenant d'un étage de compression 920 situé en aval dans le moteur d'aéronef 2 par l'intermédiaire des moyens d'amenée 300, 400, est conduit du carter d'entrée 6 dans chaque corps creux 13 de partie fixe 12.

Selon le premier mode de réalisation du système de dégivrage illustré à la figure 4, la branche 162, qui se trouve côté intrados du bord de fuite 16 de la partie fixe 12, comporte au moins une fenêtre d'émission 202 par laquelle l'air secondaire s'écoule hors du corps creux 13, comme indiqué par la flèche 50. Cet air chaud longe ensuite l'intrados du volet mobile 18, comme indiqué par la flèche 62. L'intrados du volet mobile 18 est ainsi directement réchauffé, par effet de convection. Par conséquent, la formation de glace sur l'intrados du volet mobile est empêchée. Selon ce premier mode de réalisation, seule la branche 162 se trouvant du côté intrados comporte une telle fenêtre d'émission 202.

Selon le second mode de réalisation du système de dégivrage illustré à la figure 5 :
- la branche 162, qui se trouve côté intrados du bord de fuite 16 de la partie fixe 12, comporte au moins une fenêtre d'émission 202 par laquelle l'air secondaire s'écoule hors du corps creux 13, comme indiqué par la flèche 52,
- la branche 164, qui se trouve côté extrados du bord de fuite 16 de la partie fixe 12, comporte au moins une fenêtre d'émission 204 par laquelle l'air secondaire s'écoule hors du corps creux 13, comme indiqué par la flèche 54.

De manière analogue au premier mode de réalisation, l'air chaud s'écoulant à travers une fenêtre d'émission 202 se trouvant dans la branche 162 située côté intrados de la partie fixe 12 longe ensuite l'intrados du volet mobile 18, comme indiqué par la flèche 62. L'intrados du volet mobile 18 est ainsi directement réchauffé, par effet de convection. De plus, l'air chaud s'écoulant à travers une fenêtre d'émission 204 se trouvant dans la branche 164 située côté extrados de la partie fixe 12 longe ensuite l'extrados du volet mobile 18, comme indiqué par la flèche 64. L'extrados du volet mobile est ainsi directement réchauffé, par effet de convection. Par suite, l'intrados du volet mobile 18 est indirectement réchauffé, par effet de conduction à travers l'épaisseur du volet mobile 18, comme indiqué par la flèche 80. Par conséquent, la formation de glace sur l'intrados du volet mobile est empêchée par effet combiné de convection (flèches 62, 64) et de conduction (flèche 80). Ce deuxième mode de réalisation est plus particulièrement adapté aux volets mobiles 18 réalisés en un matériau conducteur de chaleur et ayant une épaisseur suffisamment faible pour que l'effet de conduction soit significatif. Selon ce second mode de réalisation, à la fois la branche 162 se trouvant du côté intrados et la branche 164 se trouvant du côté extrados comportant une telle fenêtre d'émission 202, 204.

Conformément à la première variante du second mode de réalisation du dispositif de dégivrage, les fenêtres d'émission 202 qui se trouvent côté intrados et les fenêtres d'émission 204 qui se trouvent côté extrados sont disposées en face les unes des autres, comme le montre la figure 5.

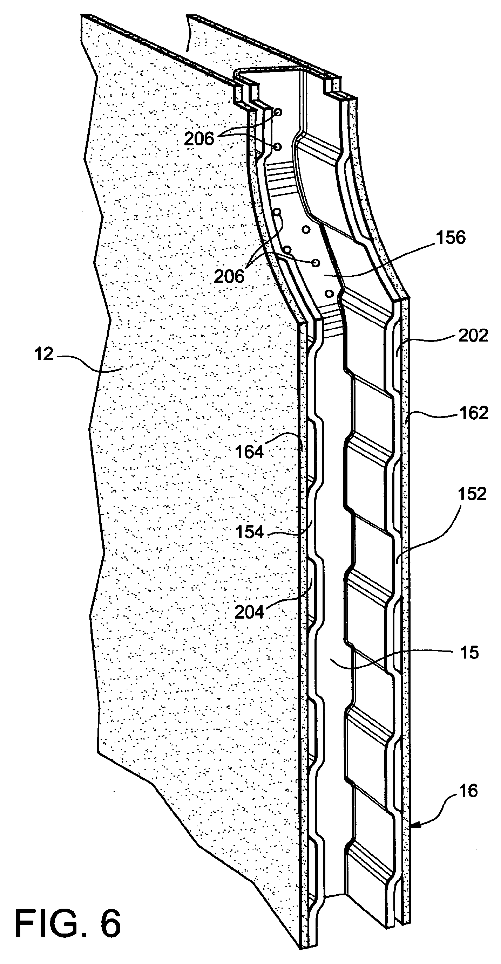

Conformément à la seconde variante du second mode de réalisation du dispositif de dégivrage, les fenêtres d'émission 202 qui se trouvent côté intrados et les fenêtres d'émission 204 qui se trouvent côté extrados sont disposées en quinconce les unes par rapport autres, comme le montre la figure 6 qui illustre, en perspective arrière le bord de fuite 16 en forme de « U » de la partie fixe 12, pour cette seconde variante.

Selon le premier ou le second mode de réalisation du dispositif de dégivrage, les fenêtres d'émission 202, 204 situées sur une même branche 162, 164 du « U » sont de préférence réparties régulièrement le long de ladite branche 162, 164 du « U », et de préférence le long de la totalité du bord de fuite 16 de la partie fixe 12.

Les fenêtres d'émission 202, respectivement 204, illustrées aux figures 2, 4, 5, et 6 sont obtenues en accolant à la branche du « U » côté intrados, respectivement côté extrados, une tôle nervurée 152, respectivement 154, ladite tôle nervurée 152, 154 se trouvant dans le prolongement du fond 15 du bord de fuite 16 et perpendiculaires audit fond 15. Cette tôle nervurée 152, 154 est obtenue par un procédé d'usinage, ou par un procédé de fonderie, ou encore, de manière préférée, par des opérations de découpe et d'emboutissage à partir d'une tôle plate. Aux endroits où la tôle nervurée 162, 164 n'est pas en contact avec la branche 162, 164 du « U », sont ainsi crées les fenêtres d'émission 202, 204 destinées au passage d'air chaud de l'intérieur du corps creux 13 de la partie fixe 12 vers le volet mobile 18.

Du point de vue de la fabrication, il est avantageux de réaliser de cette manière le bord de fuite 16 de la partie fixe 12, car le nombre d'opérations nécessaires est réduit, et qu'il suffit d'une seule ligne de production pour réaliser l'ensemble de la partie fixe. Par suite les coûts de production sont également réduits.

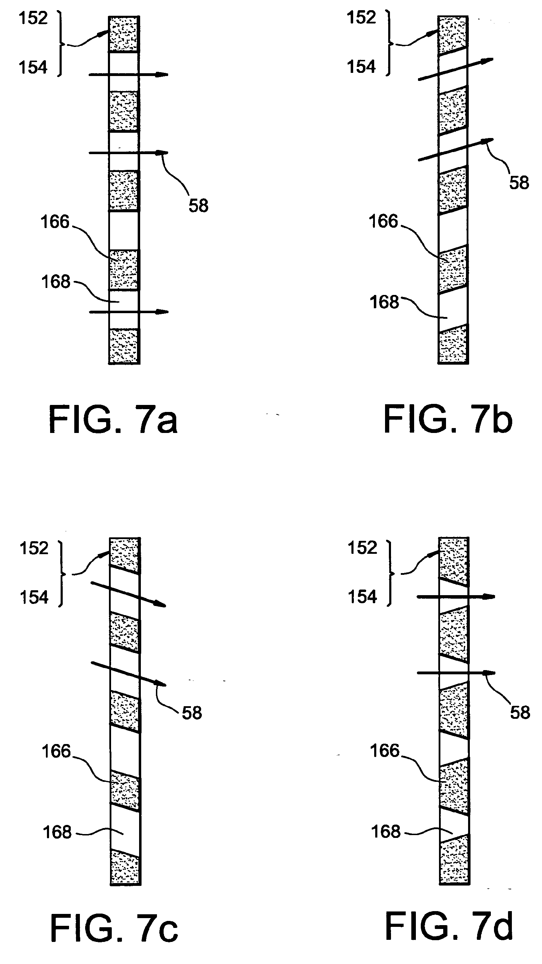

Les fenêtres d'émission 202, 204 peuvent présenter différentes formes. Des exemples de réalisation de ces différentes formes sont illustrées aux figures 7a, 7b, 7c, 7d, qui montrent de façon schématique, en vue latérale, une tôle nervurée 152, 154. Ladite tôle nervurée 152, 154 comporte des zones en relief 166 destinées à être accolées aux branches 162, 164 du « U », et des zones en creux, destinées à former une paroi de fenêtre d'émission 202, 204, définissant la forme de ladite fenêtre d'émission 202, 204. Sur les figures 7a à 7d, les flèches 58 schématisent un écoulement d'air chaud destiné à traverser une fenêtre d'émission 202, 204.

Selon une première forme de réalisation illustrée à la figure 7a, la géométrie des zones en creux 168 confère aux fenêtres d'émission 202, 204 une section constante droite.

Selon une deuxième forme de réalisation illustrée à la figure 7b, la géométrie des zones en creux 168 confère aux fenêtres d'émission 202, 204 une section constante inclinée vers le haut dans le sens de l'écoulement d'air chaud 58.

Selon une troisième forme de réalisation illustrée à la figure 7c, la géométrie des zones en creux 168 confère aux fenêtres d'émission 202, 204 une section constante inclinée vers le bas dans le sens de l'écoulement d'air chaud 58.

Selon une quatrième forme de réalisation illustrée à la figure 7d, la géométrie des zones en creux 168 confère aux fenêtres d'émission 202, 204 une section évolutive, par exemple en forme de queue de carpe.

D'autres géométries de fenêtres d'émission sont bien sûr envisageables. En outre, on peut combiner, le long de la branche côté intrados 162 et/ou le long de la branche côté extrados 164, des fenêtres d'émission successives ayant des formes différentes, par exemple : au moins une fenêtre d'émission ayant une section constante droite, et/ou au moins une fenêtre d'émission ayant une section constante inclinée vers le haut, et/ou au moins une fenêtre d'émission ayant une section constante inclinée vers le bas, et/ou au moins une fenêtre d'émission ayant une section évolutive.

Comme on le voit sur la figure 6, la liaison du volet mobile 18 avec chacun des pivots 24, 26 se fait dans une zone 186, 188 dudit volet mobile 18 qui présente une géométrie inclinée par rapport à la géométrie du reste du bord d'attaque 20 dudit volet mobile 18. En face de ces zones 186, 188 à géométrie inclinée, le bord de fuite 16 de la partie fixe 12 présente lui aussi des zones 156, 158 à géométrie inclinée par rapport à la géométrie du reste dudit bord de fuite 16, dites zones en « S ». De manière optionnelle, le dispositif de dégivrage comporte, au moins dans l'une de ces zones en « S » 156, 158, des perforations 206 traversant sensiblement selon une direction amont-aval le fond du « U » formant ledit bord de fuite 16. Lesdites perforations sont réalisées, par exemple par une opération de perçage au laser. Ainsi, ladite zone en regard 186, 188 du bord d'attaque 20 du volet mobile 18 peut également être atteinte par de l'air chaud.

Un avantage de ces perforations optionnelles réside dans le fait qu'elles permettent d'amener de façon plus précise de l'air chaud sur le bord d'attaque du volet au voisinage des pivots, par effet de convection, puis jusqu'à la liaison entre le volet et chacun de pivots, par effet de conduction. Ainsi, il est possible d'éviter un blocage du mouvement de pivotement du volet, en évitant la présence de glace au niveau de cette liaison entre le volet et chacun des pivots.

## Revendications

1. Aube (10) de roue directrice d'entrée (4) d'une turbomachine (2),
ladite aube (10) comportant une partie fixe (12) disposée en amont et un volet mobile (18) associé disposé en aval, et
ladite partie fixe (12) comportant un corps creux (13) et un bord de fuite (16) dont le profil présente sensiblement la forme d'un « U » dont les branches (162, 164) s'étendent sensiblement vers l'aval, l'une des branches (162) se trouvant disposée côté intrados (I) et l'autre branche (164) se trouvant disposée côté extrados (E),
**caractérisée en ce qu'**elle est dotée d'un dispositif de dégivrage qui comporte au moins une fenêtre d'émission (202), orientée sensiblement selon une direction amont-aval, et disposée le long de la branche (162) du « U » se trouvant du côté intrados (I) du bord de fuite (16) de la partie fixe (12).

2. Aube selon la revendication 1, **caractérisée en ce que** le dispostif de dégivrage comporte en outre au moins une fenêtre d'émission (204), orientée sensiblement selon une direction amont-aval, et disposée le long de la branche (164) du « U » se trouvant du côté extrados (E) du bord de fuite (16) de la partie fixe (12).

3. Aube selon la revendication 2, **caractérisée en ce que** la (les) fenêtre(s) d'émission (202) disposée(s) du côté intrados (I) et la (les) fenêtre(s) d'émission (204) se trouvant du côté extrados (E) sont disposées les unes en face des autres.

4. Aube selon la revendication 2, **caractérisée en ce que** la (les) fenêtre(s) d'émission (202) se trouvant du côté intrados (I) et la (les) fenêtre(s) d'émission (204) se trouvant du côté extrados (E) sont disposées en quinconce les unes par rapport aux autres.

5. Aube selon l'une quelconque des revendications 1 à 4, **caractérisée en ce que** au moins l'une des fenêtres d'émission (202, 204) possède une section constante droite.

6. Aube selon l'une quelconque des revendications 1 à 5, **caractérisée en ce que** au moins l'une des fenêtres d'émission (202, 204) possède une section constante inclinée vers le haut.

7. Aube selon l'une quelconque des revendications 1 à 6, **caractérisée en ce que** au moins l'une des fenêtres d'émission (202, 204) possède une section constante inclinée vers le bas.

8. Aube selon l'une quelconque des revendications 1 à 7, **caractérisée en ce que** au moins l'une des fenêtres d'émission (202, 204) possède une section évolutive.

9. Aube selon la revendication 8, **caractérisée en ce que** ladite section évolutive est du type en queue de carpe.

10. Aube selon l'une quelconque des revendications 1 à 9, **caractérisée en ce que** lorsqu'une branche (162, 164) du « U » formant le bord de fuite (16) de la partie fixe (12) comporte au moins deux fenêtres d'émission (202, 204), lesdites fenêtres d'émission (202, 204) sont réparties régulièrement sur la longueur de ladite branche (162, 164).

11. Aube selon l'une quelconque des revendications 1 à 10, **caractérisée en ce que** la (les) fenêtre(s) d'émission (202, 204) est (sont) obtenue(s) par emboutissage d'une tôle.

12. Aube selon l'une quelconque des revendications 1 à 11, ledit volet mobile (18) étant apte à pivoter autour d'une direction (22) sensiblement radiale à partir d'un moyeu central (8), par l'intermédiaire d'un pivot central (24) et d'un pivot périphérique (26), **caractérisée en ce que** le dispositif de dégivrage comporte en outre des perforations (206) traversant sensiblement selon une direction amont-aval le fond (15) du « U » formant le bord de fuite (16) de la partie fixe (12), lesdites perforations (206) étant localisées au moins dans une zone (156, 158) se trouvant, en fonctionnement, sensiblement en face d'un desdits pivots (24, 26).

13. Aube selon l'une quelconque des revendications 1 à 12, **caractérisée en ce qu'**elle comporte en outre des moyens d'amenée d'air chaud (300, 400) vers un carter (6) de la roue directrice d'entrée (4), depuis un étage de compression (920) situé en aval de ladite roue directrice d'entrée (4).

14. Aube selon la revendication 13, **caractérisée en ce que** lesdits moyens d'amenée d'air chaud (300, 400) comportent un collecteur (300), disposé de manière circonférentielle autour dudit carter (6).

15. Aube selon la revendication 14, **caractérisée en ce que** lesdits moyens d'amenée d'air chaud (300, 400) comportent en outre au moins un conduit d'amenée (400) reliant ledit étage (920) de compression audit collecteur (300).

16. Aube selon l'une quelconque des revendications 1 à 15, **caractérisées en ce que** le volet mobile (18) est apte à pivoter autour d'une direction (22) sensiblement radiale à partir d'un moyeu central (8).

17. Aube selon l'une quelconque des revendications 1 à 16, **caractérisée en ce que** la fenêtre d'émission (202) est obtenue en accolant à ladite branche (162) du "U" une tôle nervurée (152).

18. Moteur d'aéronef (2), **caractérisé en ce qu'**il comporte une roue directrice d'entrée (4) équipée d'aubes (10) selon l'une quelconque des revendications 1 à 16.

## Claims

1. Vane (10) of an inlet guide wheel (4) of a turbojet (2),
said vane (10) comprising a fixed part (12) arranged on the upstream side and an associated mobile flap (18) arranged on the downstream side, and
said fixed part (12) comprising a hollow body (13) and a trailing edge (16), for which the profile is substantially in the shape of a "U", with the branches (162, 164) extending substantially in the downstream direction, one of the branches (162) being located on the intrados side (I) and the other branch (164) being located on the extrados side (E),
**characterized in that** it has a deicing device with at least one emission window (202), oriented substantially along an upstream-downstream direction, and arranged along the branch (162) of the "U" located on the extrados side (I) of the trailing edge (16) of the fixed part (12).

2. Vane according to claim 1, **characterized in that** the deicing device also has at least one emission window (204) substantially oriented in an upstream-downstream direction and positioned along the branch (164) of the "U" located on the extrados side (E) of the trailing edge (16) of the fixed part (12).

3. Vane according to claim 2, **characterized in that** the emission window(s) (202) located on the intrados side (I) and the emission window(s) (204) on the extrados side (E) are positioned facing one another.

4. Vane according to claim 2, **characterized in that** the emission window(s) (202) on the intrados side (I) and the emission window(s) (204) on the extrados side (E) are staggered with respect to one another.

5. Vane according to any one of the claims 1 to 4, **characterized in that** at least one of the emission windows (202, 204) has a constant straight section.

6. Vane according to any one of the claims 1 to 5, **characterized in that** at least one of the emission windows (202, 204) has an upwardly inclined, constant section.

7. Vane according to any one of the claims 1 to 6, **characterized in that** at least one of the emission windows (202, 204) has a downwardly inclined, constant section.

8. Vane according to any one of the claims 1 to 7, **characterized in that** at least one of the emission windows (202, 204) has an expandable section.

9. Vane according to claim 8, **characterized in that** said expandable section is of the fishtail type.

10. Vane according to any one of the claims 1 to 9, **characterized in that** when a branch (162, 164) of the U forming the trailing edge (16) of the fixed part (12) has at least two emission windows (202, 204), said emission windows (202, 204) are regularly distributed over the length of said branch (162, 164).

11. Vane according to any one of the claims 1 to 10, **characterized in that** the emission window(s) (202, 204) are obtained by stamping a sheet.

12. Vane according to any one of the claims 1 to 11, said mobile flap (18) being able to pivot about a substantially radial direction (12) from a central hub (8), by means of a central pivot (24) and a peripheral pivot (26), **characterized in that** the deicing device also has perforations (206) essentially passing in an upstream-downstream direction through the bottom (15) of the U forming the trailing edge (16) of the fixed part (12), said perforations (206) being located at least in a zone (156, 158) which, in operation, substantially faces one of said pivots (24, 26).

13. Vane according to any one of the claims 1 to 12, **characterized in that** it also has hot air supply means (300, 400) to a casing (6) of the inlet guide wheel (4) from a compression stage (9, 20) upstream of said inlet guide wheel (4).

14. Vane according to claim 13, **characterized in that** said hot air supply means (300, 400) incorporate a collector (300) positioned circumferentially around said casing (6).

15. Vane according to claim 14, **characterized in that** said hot air supply means (300, 400) also incorporate at least one supply duct (400) linking said compression stage (9, 20) with said collector (300).

16. Vane according to any one of the claims 1 to 15, **characterized in that** the mobile flap (18) is able to pivot about a substantially radial direction (22) from a central hub (8).

17. Vane according to any one of the claims 1 to 16, **characterized in that** said emission window (202) is obtained by joining a ribbed plate (152) to said branch (162) of the U.

18. Aircraft engine (2), **characterized in that** it comprises an inlet guide wheel (4) equipped with vanes (10) according to any one of the claims 1 to 16.

## Patentansprüche

1. Schaufel (10) eines Leitschaufelrades (4) einer Turbomaschine (2),
wobei diese Schaufel (10) einen vom angeordneten feststehenden Teil (12) und eine zugehörige, hinten angeordnete bewegbare Klappe (18) aufweist, und
wobei dieser feststehende Teil (12) einen hohlen Körper (13) und eine Hinterkante (16) aufweist, deren Profil im Wesentlichen U-förmig mit Schenkeln (162, 164) ausgeführt ist, die sich im Wesentlichen nach hinten erstrecken, wobei der eine Schenkel (162) an der Druckseite (I) angeordnet ist, und der andere Schenkel (164) an der Saugseite (E) angeordnet ist,
**dadurch gekennzeichnet,**
**dass** sie mit einer Enteisungsvorrichtung ausgestattet ist, die mindestens ein Auslassfenster (202) umfasst, das im Wesentlichen in einer Richtung von vorn nach hinten ausgerichtet ist und entlang des Schenkels (162) des U-Profils angeordnet ist, der sich an der Druckseite (I) der Hinterkante (16) des feststehenden Teils (12) befindet.

2. Schaufel nach Anspruch 1,
**dadurch gekennzeichnet,**
**dass** die Enteisungsvorrichtung ferner mindestens ein Auslassfenster (204) umfasst, das im Wesentlichen in einer Richtung von vom nach hinten ausgerichtet ist und entlang des Schenkels (164) des U-Profils angeordnet ist, der sich an der Saugseite (E) der Hinterkante (16) des feststehenden Teils (12) befindet.

3. Schaufel nach Anspruch 2,
**dadurch gekennzeichnet,**
**dass** das (die) sich an der Druckseite (I) befindende(n) Auslassfenster (202) und das (die) sich an der Saugseite (E) befindende(n) Auslassfenster (204) einander gegenüberliegend angeordnet sind.

4. Schaufel nach Anspruch 2,
**dadurch gekennzeichnet,**
**dass** das (die) sich an der Druckseite (I) befindende(n) Auslassfenster (202) und das (die) sich an der Saugseite (E) befindende(n) Auslassfenster (204) versetzt zueinander angeordnet sind.

5. Schaufel nach einem der Ansprüche 1 bis 4,
**dadurch gekennzeichnet,**
**dass** mindestens eines der Auslassfenster (202, 204) einen gleichbleibenden geraden Querschnitt aufweist.

6. Schaufel nach einem der Ansprüche 1 bis 5,
**dadurch gekennzeichnet,**
**dass** mindestens eines der Auslassfenster (202, 204) einen gleichbleibenden, nach oben geneigten Querschnitt aufweist.

7. Schaufel nach einem der Ansprüche 1 bis 6,
**dadurch gekennzeichnet,**
**dass** mindestens eines der Auslassfenster (202, 204) einen gleichbleibenden, nach unten geneigten Querschnitt aufweist.

8. Schaufel nach einem der Ansprüche 1 bis 7,
**dadurch gekennzeichnet,**
**dass** mindestens eines der Auslassfenster (202, 204) einen sich entwickelnden Querschnitt aufweist.

9. Schaufel nach Anspruch 8,
**dadurch gekennzeichnet,**
**dass** dieser sich entwickelnde Querschnitt von der Art mit aufgespreiztem Ende ist.

10. Schaufel nach einem der Ansprüche 1 bis 9,
**dadurch gekennzeichnet,**
**dass** in dem Fall, dass ein Schenkel (162, 164) des U-Profils, der die Hinterkante (16) des feststehenden Teils (12) bildet, mindestens zwei Auslassfenster (202, 204) aufweist, diese Auslassfenster (202, 204) regelmäßig über die Länge dieses Schenkels (162, 164) verteilt angeordnet sind.

11. Schaufel nach einem der Ansprüche 1 bis 10,
**dadurch gekennzeichnet,**
**dass** das (die) Auslassfenster (202, 204) durch Pressen eines Blechs erzielt wird (werden).

12. Schaufel nach einem der Ansprüche 1 bis 11, wobei die bewegbare Klappe (18) geeignet ist, um eine Richtung (22) zu schwenken, die von einer zentralen Nabe (8) aus im Wesentlichen radial verläuft, und zwar vermittels eines mittleren Drehzapfens (24) und eines Umfangs-Drehzapfens (26),
**dadurch gekennzeichnet,**
**dass** die Enteisungsvorrichtung ferner Perforierungen (206) aufweist, die durch den Boden (15) des U-Profils, das die Hinterkante (16) des feststehenden Teils (12) bildet, im Wesentlichen in einer Richtung von vorn nach hinten verlaufen, wobei diese Perforierungen (206) mindestens in einem Bereich (156, 158) angeordnet sind, der sich in Betrieb im Wesentlichen gegenüber einem der genannten Drehzapfen (24, 26) befindet.

13. Schaufel nach einem der Ansprüche 1 bis 12,
**dadurch gekennzeichnet,**
**dass** sie ferner Mittel zur Zuführung von Heißluft (300, 400) von einer Verdichtungsstufe (920), die sich hinter dem Leitschaufelrad (4) befindet, zu einem Gehäuse (6) des Leitschaufelrades (4) aufweist.

14. Schaufel nach Anspruch 8,
**dadurch gekennzeichnet,**
**dass** die Mittel zur Zuführung von Heißluft (300, 400) eine Sammelleitung (300) umfassen, die am Außenumfang um das Gehäuse (6) herum angeordnet ist.

15. Schaufel nach Anspruch 14,
**dadurch gekennzeichnet,**
**dass** die Mittel zur Zuführung von Heißluft (300, 400) ferner mindestens eine Zufuhrleitung (400) umfassen, die diese Verdichtungsstufe (920) mit dieser Sammelleitung (300) verbindet.

16. Schaufel nach einem der Ansprüche 1 bis 15,
**dadurch gekennzeichnet,**
**dass** die bewegbare Klappe (18) geeignet ist, um eine Richtung (22) zu schwenken, die von einer zentralen Nabe (8) aus im Wesentlichen radial verläuft.

17. Schaufel nach einem der Ansprüche 1 bis 16,
**dadurch gekennzeichnet,**
**dass** das Auslassfenster (202) erzielt wird, indem an den Schenkel (162) des U-Profils ein geripptes Blech (152) angefügt wird.

18. Flugzeugmotor (2),
**dadurch gekennzeichnet,**
**dass** er ein Leitschaufelrad (4) aufweist, das mit Schaufeln (10) nach einem der Ansprüche 1 bis 16 ausgerüstet ist.
